# EUROPEAN PATENT APPLICATION

(11) **EP 4 738 568 A1**
(43) Date of publication of application: **06.05.2026**
(21) Application number: 25194332.0
(22) Date of filing: 06.08.2025
(51) Int. Cl.: H01M 50/211, H01M 50/242, H01M 50/291

(54) **BATTERY DEVICE**

(30) Priority: 30.10.2024 KR 20240150806
(71) Applicant: SK On Co., Ltd., Seoul 03161 (KR)
(72) Inventor: HONG, Sung Min, Daejeon 34124 (KR); CHOI, Yang Kyu, Daejeon 34124 (KR); PARK, Sung Wan, Daejeon 34124 (KR); LEE, Jong Hwa, Daejeon 34124 (KR); RHEE, Seo Roh, Daejeon 34124 (KR); CHO, Jun Hui, Daejeon 34124 (KR); CHOI, Keun Woo, Daejeon 34124 (KR)
(74) Representative: Prüfer & Partner mbB Patentanwälte · Rechtsanwälte

(57) **Abstract**

A battery device includes a cell assembly in which a plurality of battery cells are arranged in a first direction, a case having an accommodation space in which the cell assembly may be accommodated, and a surface pressure member providing surface pressure to the cell assembly, wherein the case may include a partition partitioning the accommodation space, and the surface pressure member accommodates the partition and may be coupled to the partition.

## Description

### TECHNICAL FIELD

The disclosure relates to a battery device having a surface pressure member.

### BACKGROUND

Unlike primary batteries, secondary batteries may be charged and discharged and may be applied to devices within various fields, such as digital cameras, mobile phones, laptops, and hybrid vehicles. Examples of secondary batteries include nickel-cadmium batteries, nickel-metal hydride batteries, nickel-hydrogen batteries, and lithium secondary batteries.

Among secondary batteries, research has been actively conducted on lithium secondary batteries with high energy density and discharge voltage, and recently, lithium secondary batteries have been manufactured as flexible pouch-type battery cells and battery devices have been manufactured in the form of modules by connecting a plurality of secondary batteries.

In the case of arranging a plurality of battery cells in one case, if one of the battery cells expands, the surface pressure thereof may not be evenly applied to the other battery cells and such a surface pressure deviation may cause deterioration of the battery cells.

### SUMMARY

The present disclosure may be implemented in some embodiments to provide a battery device in which surface pressure is provided to a battery cell.

The battery device of the present disclosure may be widely applied to devices within green technology fields, such as electric vehicles, battery charging stations, and solar power generation and wind power generation using batteries. In addition, the battery case of the present disclosure may be used in eco-friendly electric vehicles, hybrid vehicles, etc. to prevent a climate change by suppressing air pollution and greenhouse gas emissions.

In some embodiments of the present disclosure, a battery device includes: a cell assembly in which a plurality of battery cells are arranged in a first direction; a case having an accommodation space in which the cell assembly may be accommodated; and a surface pressure member providing surface pressure to the cell assembly, wherein the case includes a partition partitioning the accommodation space, and the surface pressure member accommodates the partition and may be coupled to the partition.

The surface pressure member may include: a base plate disposed above the partition; and a pressing portion extending from the base plate and disposed to face both sides of the partition, wherein the pressing portion may elastically press a side surface of the cell assembly.

The pressing portion may include: a pressing plate disposed to be spaced apart from the partition by a certain distance and pressing the cell assembly; a support portion bent from a lower end of the pressing plate and contacting the partition; and a connecting plate connecting the pressing plate to the base plate.

The surface pressure member may be formed by bending a single metal plate.

The surface pressure member may include: a first bend line through which the base plate may be connected to the connecting plate; and a second bend line through which the pressing plate may be connected to the connecting plate, wherein the first bend line and the second bend line may be formed to be parallel to a length direction of the partition.

The base plate may be disposed parallel to an upper surface of the partition, and the pressing plate may be disposed parallel to a side surface of the partition.

The base plate and the pressing plate may be arranged to be perpendicular to each other.

Only the support portion of the surface pressure member may contact the partition.

The battery device may further include: a deformation-suppressing member disposed between the pressing plate and the partition to limit deformation of the pressing plate, wherein a thickness of the deformation-suppressing member is formed to be less than a gap between the pressing plate and the partition.

The battery device may further include: a stopper formed to protrude from a lower end portion of a side surface of the partition, wherein the support portion is restrained from moving downwardly by the stopper.

The battery device may further include: a protrusion formed to protrude from an upper end portion of the side surface of the partition, wherein the protrusion is disposed to contact the connecting plate.

The battery device may further include: a fastening member tightly attaching the base plate to an upper surface of the partition and fastened to the partition.

The pressing plate may be pressed in a direction away from the partition as the base plate is closer to the upper surface of the partition.

In some embodiments of the present disclosure, a battery device includes: a cell assembly in which a plurality of battery cells may be arranged in a first direction; a case having an accommodation space in which the cell assembly may be accommodated; and a surface pressure member coupled to a partition partitioning the accommodation space, wherein the surface pressure member includes two pressing portions respectively disposed on both sides of the partition to provide surface pressure to the cell assembly in the first direction and a base plate interconnecting the two pressing portions, and the base plate is disposed parallel to an upper surface of the partition.

The base plate may be disposed to be spaced apart from the partition by a certain distance.

The battery device may further include: a fastening member fixing and fastening the base plate to an upper surface of the partition.

### BRIEF DESCRIPTION OF DRAWINGS

Certain aspects, features, and advantages of the present disclosure are illustrated by the following detailed description with reference to the accompanying drawings.
FIG. 1 is a perspective view schematically illustrating a battery device according to an embodiment of the present disclosure;
FIG. 2 is a partially exploded perspective view of FIG. 1;
FIG. 3 is a cross-sectional view taken along line I-I' of FIG. 1;
FIG. 4 is an enlarged view of a surface pressure member illustrated in FIG. 1;
FIGS. 5 and 6 are cross-sectional views illustrating a method of manufacturing the battery device illustrated in FIG. 1;
FIG. 7 is a cross-sectional view of a battery device according to another embodiment of the present disclosure;
FIG. 8 is a cross-sectional view of a battery device according to another embodiment of the present disclosure; and
FIGS. 9 and 10 are views illustrating a process of coupling a surface pressure member illustrated in FIG. 8 to a partition.

### DETAILED DESCRIPTION

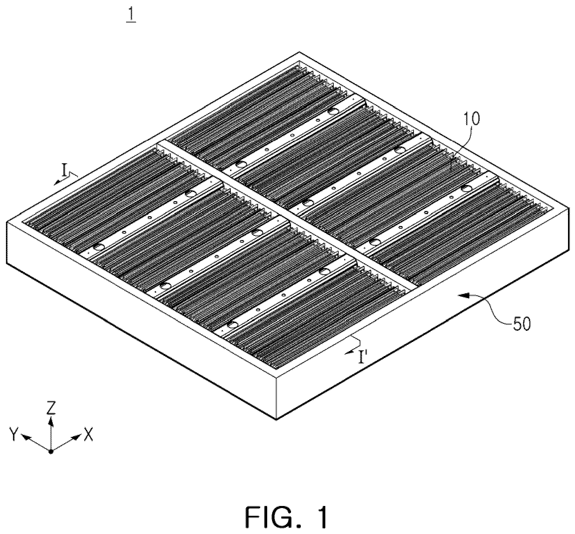

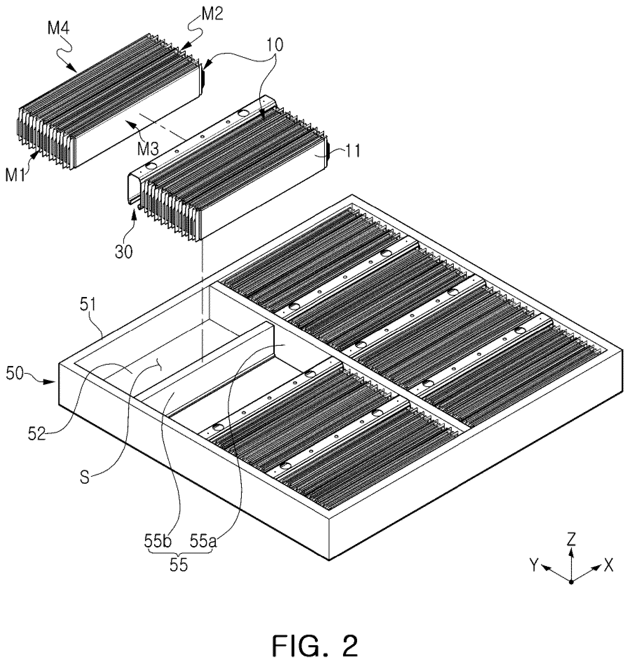

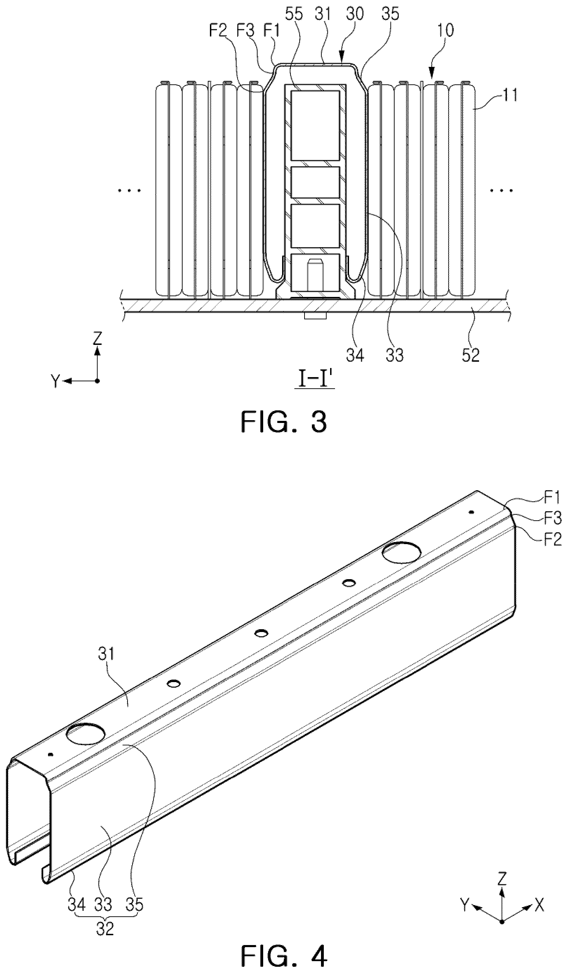

FIG. 1 is a perspective view schematically illustrating a battery device according to an embodiment of the present disclosure, and FIG. 2 is a partially exploded perspective view of FIG. 1. FIG. 3 is a cross-sectional view taken along line I-I' of FIG. 1.

Referring to FIGS. 1 to 3, a battery device 1 according to an embodiment of the present disclosure may include a cell assembly 10 in which a plurality of battery cells 11 are arranged in a first direction (e.g., a Y-direction), a case 50 having an accommodation space S in which the cell assembly 10 is accommodated, and a surface pressure member 30 providing a surface pressure to the cell assembly 10. In addition, the case 50 includes a partition 55 partitioning the accommodation space S, and the surface pressure member 30 may accommodate the partition 55 therein and may be coupled to the partition 55.

In addition, the battery device 1 according to an embodiment may include the cell assembly 10 in which a plurality of battery cells 11 are arranged in the first direction, the case 50 having the accommodation space S in which the cell assembly 10 is accommodated, and the surface pressure member 30 coupled to the partition 55 partitioning the accommodation space S. The surface pressure member 30 may include two pressing portions 32 respectively arranged on both sides of the partition 55 to provide surface pressure to the cell assembly 10 in the first direction and a base plate 31 interconnecting the two pressing portions 32, and the base plate 31 may be disposed parallel to an upper surface of the partition 55.

The cell assembly 10 may include the battery cell 11 that may be charged and discharged, such as a lithium battery or a nickel-hydrogen battery. Each cell assembly 10 may be formed in an approximately hexahedral shape in which the plurality of battery cells 11 are arranged in the first direction, and may be accommodated in a separate housing or fixed and tightly attached by a bracket or the like.

Therefore, the cell assembly 10 may include four sides M1, M2, M3, and M4. The four sides M1, M2, M3, and M4 may include a first side M1 and a second side M2 on which electrode leads of the battery cells 11 are arranged and a third side M3 and a fourth side M4 arranged at both ends of the battery cells 11 in an arrangement direction.

The first side M1 and the second side M2 are two sides forming opposite directions, and in the present embodiment, a case in which the electrode leads are arranged on the first side M1 and the second side M2 is given as an example. However, the present embodiment is not limited thereto.

The third side M3 and the fourth side M4 are two sides forming opposite directions and may be sides orthogonal to the first side M1 and the second side M2.

Since the third side M3 and the fourth side M4 form sides at both ends of the battery cells 11 in the first direction, which is the arrangement direction, the third side M3 and the fourth side M4 may refer to sides arranged parallel to a surface direction of the battery cells 11.

The case 50 may provide an accommodation space S accommodating other components therein. Accordingly, the case 50 may be provided in a form surrounding the entire cell assemblies 10, and the plurality of cell assemblies 10 may be arranged parallel to form at least one row within the accommodation space S of the case 50.

The case 50 may be formed of a metal material to secure rigidity, but is not limited thereto. In addition, in order to enhance a heat dissipation effect, at least a portion of the case 50 may be formed of aluminum.

The case 50 may include a side wall portion 51 forming a side surface, a lower plate 52 covering a lower portion of the accommodation space S and may further include an upper plate covering an upper portion of the accommodation space S, although not illustrated. In addition, the case 50 of the present embodiment may include the partition 55 coupled to the side wall portion 51 to partition the accommodation space S inside the side wall portion 51.

The side wall portion 51 may form an outer surface of the case 50 and may define an internal space of the case 50. Accordingly, the cell assemblies 10 may be accommodated within the internal space defined by the side wall portion 51 and may be seated on the lower plate 52.

The lower plate 52 may support a lower surface of the cell assemblies 10.

The partition 55 may be disposed across the internal space formed by the side wall portion 51 to partition the internal space into a plurality of accommodation spaces S. Accordingly, the plurality of cell assemblies 10 may be distributed and arranged in each of the plurality of accommodation spaces S partitioned by the side wall portion 51 and the partition 55.

At least a portion of the partition 55 may be fastened to the side wall portion 51, thereby reinforcing the overall rigidity of the case 50. In addition, the partition 55 may be disposed between the cell assemblies 10 to suppress the propagation of gas or flames between the cell assemblies 10.

The partition 55 of the present embodiment may include at least one first partition 55a disposed parallel to a width direction (the Y-direction) of the cell assemblies 10 and at least one second partition 55b disposed parallel to a length direction (an X-direction) of the cell assemblies 10.

The surface pressure member 30 may be coupled to the partition 55. The surface pressure member 30 may be provided to provide surface pressure to the battery cells 11 included in the cell assembly 10. Therefore, the surface pressure member 30 may be disposed to face the third side M3 and the fourth side M4 of the side surfaces of the cell assembly 10 in which surface pressure is required. Therefore, the surface pressure member 30 may be coupled to the second partition 55b. In the following description, unless otherwise stated, the partition 55 may refer to the second partition 55b to which the surface pressure member 30 is coupled.

FIG. 4 is an enlarged view of the surface pressure member illustrated in FIG. 1.

Referring to FIG. 4 together, the surface pressure member 30 of the present embodiment may be coupled to the partition 55 in a form surrounding both side surfaces and the upper surface of the partition 55 and may include a base plate 31 disposed above the partition 55 and the pressing portion 32 extending from the base plate 31 and disposed to face both side surfaces of the partition 55, and the pressing portion 32 may elastically press the side surface of the cell assembly 10.

The base plate 31 may be disposed to face the upper surface of the partition 55, and a surface direction may be disposed parallel to the first direction (hereinafter, the surface pressure direction) in which surface pressure is applied to the cell assembly 10. In an embodiment, the base plate 31 may be disposed to be spaced apart from the partition 55 by a certain distance.

The pressing portion 32 may be disposed between the side surface of the partition 55 and the cell assembly 10, and a portion thereof may be in contact with the cell assembly 10 and press the cell assembly 10.

The pressing portion 32 may include a pressing plate 33 disposed to be spaced apart from the partition 55 by a certain distance and pressing the cell assembly 10, a support portion 34 bent from a lower end of the pressing plate 33 and contacting the partition 55, and a connecting plate 35 connecting the pressing plate 33 to the base plate 31.

The pressing plate 33 may be disposed to contact the cell assembly 10. In an embodiment, the pressing plate 33 may refer to a portion formed flat and in surface contact with the side surface of the cell assembly 10. The pressing plate 33 may be formed with an area smaller than the side surface of the cell assembly 10 and may be disposed at a predetermined distance from the partition 55. A space between the pressing plate 33 and the partition 55 may be used as a space in which the pressing plate 33 is disposed to be pressed by the cell assembly 10 so as to be elastically deformed.

The pressing plate 33 may be disposed to be approximately perpendicular to the base plate 31. In an embodiment, the base plate 31 may be disposed parallel to the upper surface of the partition 55, and the pressing plate 33 may be disposed parallel to the side surface of the partition 55.

In an embodiment, the base plate 31 and the pressing plate 33 may be arranged to be perpendicular to each other. Therefore, when the pressing plate 33 is elastically deformed by force received in the surface pressure direction (the Y-axis direction), a thickness direction, the base plate 31 receives force in the surface direction, and thus, the base plate 31 may support the pressing plate 33 without deformation.

The support portion 34 may extend from the pressing plate 33 and at least a portion thereof may protrude toward the partition 55 to support the partition 55. The surface pressure member 30 of the present embodiment may be formed so that only the support portion 34 contacts the partition 55, and thus the pressing plate 33 may be separated from the partition 55 by the support portion 34. Therefore, the support portion 34 of the present embodiment may be formed in various shapes as long as it may protrude toward the partition 55 and separate the pressing plate 33 from the partition 55.

In the present embodiment, the support portion 34 may be bent in a 'U' shape. Therefore, the support portion 34 may be elastically deformed by external force. For example, when the pressing plate 33 is pressed in the surface pressure direction, the support portion 34 may be elastically deformed together with the pressing plate 33 and may elastically support the cell assembly 10.

The connecting plate 35 is a portion connecting the pressing plate 33 to the base plate 31 and may elastically support the pressing plate 33 when the pressing plate 33 is pressed by the cell assembly 10.

In an embodiment, the surface pressure member 30 may be formed by bending a single metal plate. Accordingly, the surface pressure member 30 of the present embodiment may have a bend line formed in both a portion in which the connecting plate 35 is connected to the pressing plate 33 and a portion in which the connecting plate 35 is connected to the base plate 31. When the pressing plate 33 is pressed by the cell assembly 10, the bend line may be elastically deformed as the angle of bending changes.

For example, the surface pressure member 30 includes a first bend line F1 through which the base plate 31 is connected to the connecting plate 35 and a second bend line F2 through which the pressing plate 33 is connected to the connecting plate 35, and the first bend line F1 and the second bend line F2 may be formed to be parallel to the length direction of the partition 55.

Based on the first bend line F1, the base plate 31 and the connecting plate 35 may be disposed to form a right angle or an obtuse angle. Therefore, when the pressing plate 33 is pressed by the cell assembly 10, the surface pressure member 30 may be elastically deformed as the angle between the base plate 31 and the connecting plate 35 decreases based on the first bend line F1.

In addition, based on the second bend line F2, the pressing plate 33 and the connecting plate 35 may be disposed to form an obtuse angle. Therefore, when the pressing plate 33 is pressed by the cell assembly 10, the surface pressure member 30 may be elastically deformed as the angle between the pressing plate 33 and the connecting plate 35 increases based on the second bend line F2.

In addition, the connecting plate 35 of the present embodiment may include at least one third bend line F3 to provide additional elasticity to the pressing plate 33. The third bend line F3 may be formed parallel to the first bend line F1 and the second bend line F2 and may be formed by bending the connecting plate 35.

In the present embodiment, the third bend line F3 may be disposed between the first bend line F1 and the second bend line F2, and the angle of an outer surface of the connecting plate 35 may be formed smaller than the angle of an inner surface thereof. Therefore, when the pressing plate 33 is pressed by the cell assembly 10, the surface pressure member 30 may be elastically deformed as the curve formed by the third bend line F3 is spread out.

However, the present embodiment is not limited thereto. For example, it is also possible to form the third bend line F3 such that the angle of the outer surface is greater than the angle of the inner surface. It is also possible to form a plurality of third bend lines F3.

The surface pressure member 30 of the present embodiment may be formed by bending one plate. Also, the pressing plate 33 may operate like a plate spring to press the side surface of the cell assembly 10.

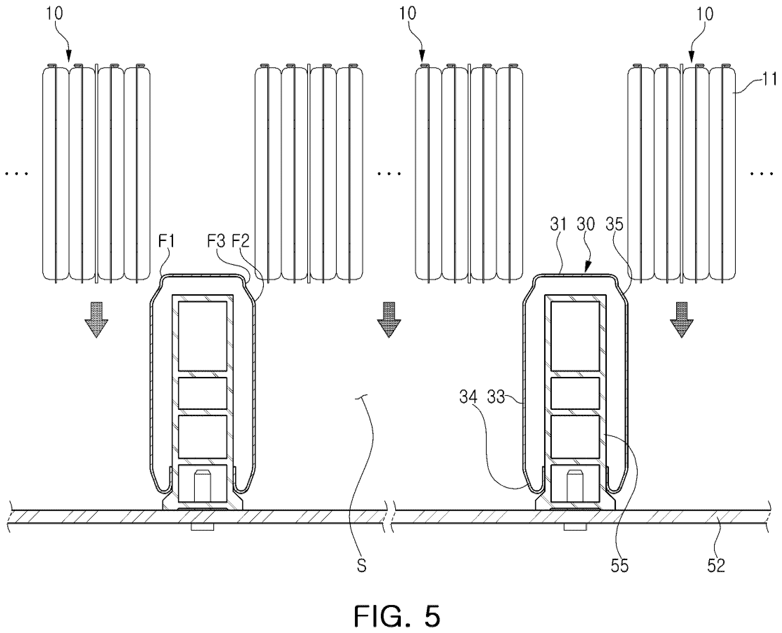

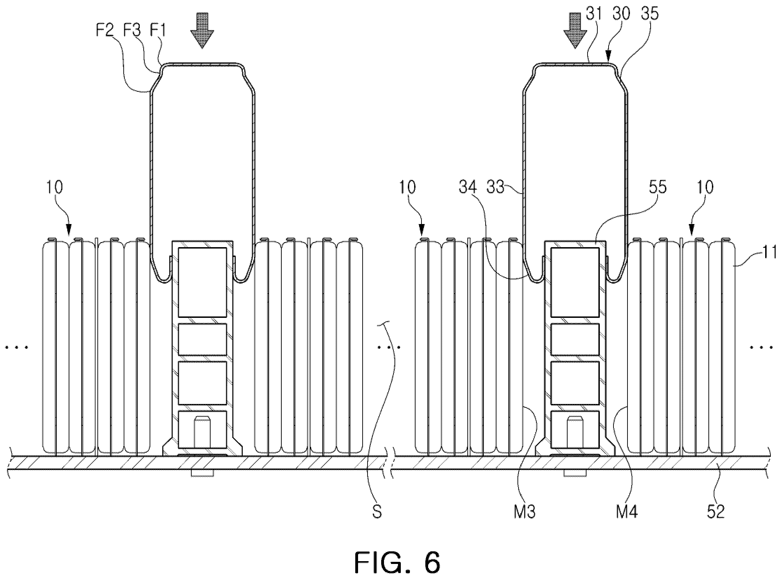

FIGS. 5 and 6 are cross-sectional views illustrating a process of manufacturing the battery device illustrated in FIG. 1.

First, referring to FIG. 5, in the method for manufacturing a battery device of the present embodiment, the surface pressure member 30 may be first coupled to the partition 55 and then the cell assembly 10 may be disposed in the accommodation space S. However, without being limited thereto, as illustrated in FIG. 6, it is also possible to first dispose the cell assembly 10 in the accommodation space S and then couple the surface pressure member 30 to the partition 55. In this case, when the cell assembly 10 is disposed in the accommodation space, the third side M3 and the fourth side M4 of the cell assembly 10 may be spaced apart from the partition 55 by a certain distance.

The surface pressure member 30 of the present embodiment described above may be fitted to the partition 55 from above the partition 55 and may be coupled to the partition 55. Therefore, the surface pressure member 30 may be easily coupled to the partition 55, thereby facilitating manufacture of the battery device.

In the battery device 1 of the present embodiment described above, since the surface pressure member 30 is disposed between the cell assembly 10 and the case 50, a surface pressure deviation caused by swelling of the battery cell 11 may be minimized, thereby improving the lifespan and performance of the battery cell 11.

In addition, the surface pressure member 30 of the present embodiment may be inserted into the partition 55 from above the partition 55 and may be coupled to the partition 55. Therefore, the surface pressure member 30 may be easily coupled to the partition 55, thereby facilitating manufacture of the battery device 1.

In addition, since the surface pressure member 30 is elastically deformed in the surface pressure direction, even if a gap formed between the cell assembly 10 and the case 50 is narrow, the surface pressure member 30 may be easily disposed within the gap.

In addition, even if the cell assemblies are not individually cased, surface pressure may be provided to each cell assembly.

Hereinafter, examples of the present disclosure will be further described with reference to specific experimental examples. The examples and comparative examples included in the experimental examples are only illustrative of the present disclosure and do not limit the scope of the appended claims. It will be apparent to those skilled in the art that various changes and modifications may be made to the embodiments within the scope and technical idea of the present disclosure, and it is natural that such changes and modifications fall within the scope of the appended claims.

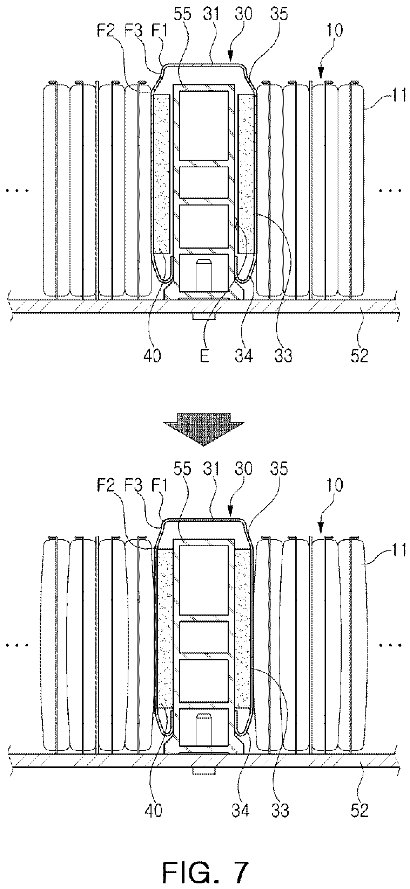

FIG. 7 is a cross-sectional view of a battery device according to another embodiment of the present disclosure, illustrating a cross-section taken along line I-I' of FIG. 1.

Referring to FIG. 7, the battery device of the present embodiment may include a deformation-suppressing member 40 disposed between the pressing plate 33 and the partition 55 to limit deformation of the pressing plate 33. In the present embodiment, a thickness of the deformation-suppressing member 40 may be formed to be less than the gap between the pressing plate 33 and the partition 55.

The deformation-suppressing member 40 may suppress displacement of the pressing plate 33 when the cell assembly 10 presses the surface pressure member. Therefore, the deformation-suppressing member 40 may be formed of any material as long as the material is not easily deformed or destroyed when the cell assembly 10 presses the pressing plate 33.

In an embodiment, the deformation-suppressing member 40 may be formed of a metal or plastic material. In addition, in an embodiment, the deformation-suppressing member 40 may include any one of rubber, urethane, and silicone.

The deformation-suppressing member 40 may be attached to either the pressing plate 33 or the partition 55. In addition, the deformation-suppressing member 40 may be formed to have a thickness less than the gap between the pressing plate 33 and the partition 55. Therefore, when the deformation-suppressing member 40 is attached to the pressing plate 33, an empty space E may be formed between the deformation-suppressing member 40 and the partition 55. The empty space E may be used as a space in which the pressing plate 33 is deformed.

In an embodiment, when the cell assembly 10 presses the pressing plate 33, the pressing plate 33 may be elastically deformed, and the deformation-suppressing member 40 may support the pressing plate 33 with both sides thereof contacting the partition 55 and the pressing plate 33, respectively.

In this manner, in the battery device of the present embodiment, the space in which the pressing plate 33 is deformed may be adjusted by using the deformation-suppressing member 40. Therefore, the surface pressure applied to the cell assembly may be adjusted in response to the characteristics of the battery cell 11.

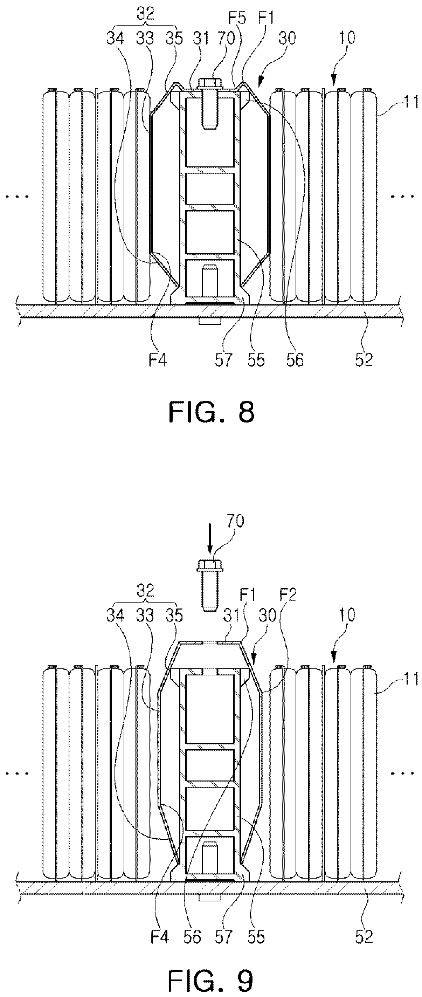

FIG. 8 is a cross-sectional view of a battery device according to another embodiment of the present disclosure, illustrating a cross-section taken along line I-I' of FIG. 1.

Referring to FIG. 8, the battery device of the present embodiment is different from the above-described embodiment in the structure of the partition 55 and the shape of the surface pressure member 30.

The partition 55 of the present embodiment may include a stopper 57 formed at a lower end portion of the side surface of the partition 55 and a protrusion 56 formed at an upper end portion of the side surface of the partition 55.

The stopper 57 is a portion supporting the support portion 34 and may limit a position at which the end of the support portion 34 contacts the partition 55. The stopper 57 may be formed to protrude from the lower end portion of the side surface of the partition, and the support portion 34 may be restrained from moving downwardly by the stopper 57. The stopper 57 may be formed to elongate in the length direction (the X-axis direction) of the partition 55 and may be formed in a region of the side surface of the partition 55 corresponding to the support portion 34.

The stopper 57 may be formed to protrude from the side surface of the partition 55, while forming a step, and the end of the support portion 34 may be disposed in a portion in which the side surface of the partition 55 and the stopper 57 meet. Accordingly, the stopper 57 may support the lower end of the support portion 34 and suppress the support portion 34 from moving downwardly of the stopper 57. Therefore, the shape of the stopper 57 is not limited as long as the stopper 57 suppresses a downward movement of the support portion 34 of the present embodiment.

The protrusion 56 may be formed to protrude in the width direction (the Y-axis direction of FIG. 2) of the partition 55 from the upper end portion of the side surface of the partition 55 and may be disposed to contact the connecting plate 35 of the surface pressure member 30. In an embodiment, the protrusion 56 may be formed in a region of the side surface of the partition 55 corresponding to the connecting plate 35 and may be elongated in the length direction (the X-axis direction of FIG. 2) of the partition 55. In addition, the protrusion 56 may protrude less than a distance between the partition 55 and the pressing plate 33.

When the surface pressure member 30 is coupled to the partition 55, the protrusion 56 may come into contact with the connecting plate 35. At this time, the movement of the connecting plate 35 toward the partition 55 may be restricted by the protrusion 56.

More specifically, the connecting plate 35 may be disposed to become away from the partition 55 in a direction toward the pressing plate 33 due to the protrusion 56. As a result, a distance between the pressing plates 33 and the partition 55 may increase, as compared to the above-described embodiment.

In addition, the protrusion 56 of the present embodiment may be disposed so that an upper surface thereof is coplanar with the upper surface of the partition 55. Therefore, the protrusion 56 may be formed to extend the upper surface of the partition 55.

The surface pressure member 30 of the present embodiment may not have the third bend line F3 described above on the connecting plate 35. In addition, the support portion 34 of the present embodiment may be formed in a flat plate shape extending from the pressing plate 33 toward the partition 55, and a fourth bend line F4 may be formed in a portion in which the pressing plate 33 is connected to the support portion 34. With respect to the fourth bend line F4, the pressing plate 33 and the support portion 34 may be disposed to form an obtuse angle.

In addition, the base plate 31 of the present embodiment may have a width smaller than a width of the upper surface of the partition 55. Here, the upper surface of the partition 55 may include a portion extended by the protrusion 56.

The battery device of the present embodiment configured in this manner may include a fastening member 70 fixing and fastening the base plate 31 to the upper surface of the partition 55.

The fastening member 70 may include a screw or a bolt and may be fastened to the upper surface of the partition 55 through the base plate 31, so that the base plate 31 may be firmly fixed to the upper surface of the partition 55.

The fastening member 70 of the present embodiment may be fastened to the partition 55 and tightly attach the base plate 31 to the upper surface of the partition 55. For example, the fastening member 70 may be fastened to the partition 55 by pressing the base plate 31 toward the upper surface of the partition 55.

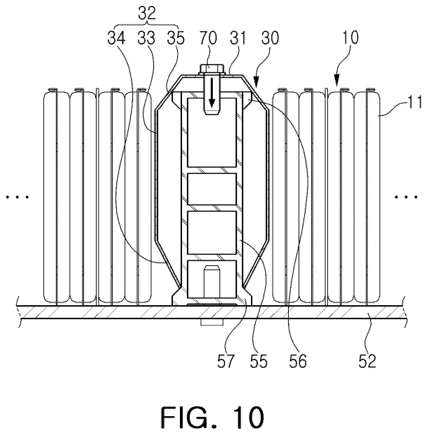

FIGS. 9 and 10 are views illustrating a process of coupling the surface pressure member illustrated in FIG. 8 to the partition.

The process of coupling the surface pressure member 30 of the present embodiment to the partition 55 will be described with reference to FIGS. 9 and 10.

First, similar to the above-described embodiment, the surface pressure member 30 of the present embodiment may be lowered from the upper portion of the partition 55 and coupled to the partition 55.

As illustrated in FIG. 9, when the surface pressure member 30 is lowered and the lower end of the support portion 34 is supported by the stopper 57, the surface pressure member 30 is not lowered any further. At this time, the base plate 31 may be spaced apart from the upper surface of the partition 55 by a certain distance.

Subsequently, the base plate 31 may be tightly attached to the upper surface of the partition 55 using the fastening member 70. The fastening member 70 may be screw-coupled to the partition 55 through the base plate 31, and the base plate 31 may be pressed toward the partition 55 by the fastening member 70. In this process, the connecting plate 35 may be rotated in the form of a lever with the protrusion 56 as a fulcrum, and thus, as illustrated in FIG. 10, the pressing plate 33 may move away from the partition 55.

Accordingly, as the base plate 31 is closer to the upper surface of the partition 55, the pressing plate 33 may be pressed in a direction away from the partition 55, and thus, surface pressure applied by the pressing plate 33 to the cell assembly 10 may increase.

In this process, the base plate 31 may be partially deformed. Due to fastening force of the fastening member 70, the base plate 31 may be deformed and bent at a position adjacent to the first bend line F1, and thus, a fifth bend line (F5 of FIG. 8) may be formed on the base plate 31.

As the fifth bend line F5 is formed, the portion in which the first bend line F1 is formed may protrude upwardly from the base plate 31. However, the present embodiment is not limited thereto.

The battery device of the present embodiment described above may easily couple the surface pressure member 30 to the partition 55 even if the space between the cell assembly 10 and the partition 55 is narrow.

In addition, during the process of fastening the fastening member 70, the pressing plate 33 may move toward the cell assembly 10 and press the side surface of the cell assembly 10, thereby providing sufficient surface pressure to the cell assembly 10.

According to an embodiment of the present disclosure, since the surface pressure member is disposed between the cell assembly and the case, a surface pressure deviation caused by battery cell swelling may be minimized. In addition, since the surface pressure member is coupled to the partition of the case, the battery device may be easily manufactured.

Only specific examples of implementations of certain embodiments are described. Variations, improvements and enhancements of the disclosed embodiments and other embodiments may be made based on the disclosure of this patent document.

(Aspect 1) A battery device includes: a cell assembly in which a plurality of battery cells are arranged in a first direction; a case having an accommodation space in which the cell assembly may be accommodated; and a surface pressure member providing surface pressure to the cell assembly, wherein the case includes a partition partitioning the accommodation space, and the surface pressure member accommodates the partition and may be coupled to the partition.

(Aspect 2) The battery device of aspect 1, the surface pressure member may include: a base plate disposed above the partition; and a pressing portion extending from the base plate and disposed to face both sides of the partition, wherein the pressing portion may elastically press a side surface of the cell assembly.

(Aspect 3) The battery device of aspect 2, the pressing portion may include: a pressing plate disposed to be spaced apart from the partition by a certain distance and pressing the cell assembly; a support portion bent from a lower end of the pressing plate and contacting the partition; and a connecting plate connecting the pressing plate to the base plate.

(Aspect 4) The battery device of aspect 1, The surface pressure member may be formed by bending a single metal plate.

(Aspect 5) The battery device of any one of aspects 3 to 4, The surface pressure member may include: a first bend line through which the base plate may be connected to the connecting plate; and a second bend line through which the pressing plate may be connected to the connecting plate, wherein the first bend line and the second bend line may be formed to be parallel to a length direction of the partition.

(Aspect 6) The battery device of any one of aspects 3 to 5, The base plate may be disposed parallel to an upper surface of the partition, and the pressing plate may be disposed parallel to a side surface of the partition.

(Aspect 7) The battery device of any one of aspects 3 to 6, The base plate and the pressing plate may be arranged to be perpendicular to each other.

(Aspect 8) The battery device of any one of aspects 3 to 7, Only the support portion of the surface pressure member may contact the partition.

(Aspect 9) The battery device of any one of aspects 3 to 8, The battery device may further include: a deformation-suppressing member disposed between the pressing plate and the partition to limit deformation of the pressing plate, wherein a thickness of the deformation-suppressing member is formed to be less than a gap between the pressing plate and the partition.

(Aspect 10) The battery device of any one of aspects 3 to 9, The battery device may further include: a stopper formed to protrude from a lower end portion of a side surface of the partition, wherein the support portion is restrained from moving downwardly by the stopper.

(Aspect 11) The battery device of aspect 10, The battery device may further include: a protrusion formed to protrude from an upper end portion of the side surface of the partition, wherein the protrusion is disposed to contact the connecting plate.

(Aspect 12) The battery device of aspect 11, The battery device may further include: a fastening member tightly attaching the base plate to an upper surface of the partition and fastened to the partition.

(Aspect 13) The battery device of aspect 12, The pressing plate may be pressed in a direction away from the partition as the base plate is closer to the upper surface of the partition.

(Aspect 14) A battery device includes: a cell assembly in which a plurality of battery cells may be arranged in a first direction; a case having an accommodation space in which the cell assembly may be accommodated; and a surface pressure member coupled to a partition partitioning the accommodation space, wherein the surface pressure member includes two pressing portions respectively disposed on both sides of the partition to provide surface pressure to the cell assembly in the first direction and a base plate interconnecting the two pressing portions, and the base plate is disposed parallel to an upper surface of the partition.

(Aspect 15) The battery device of aspect 14, The base plate may be disposed to be spaced apart from the partition by a certain distance.

(Aspect 16) The battery device of any of aspects 14 to 15, The battery device may further include: a fastening member fixing and fastening the base plate to an upper surface of the partition.

## Claims

1. A battery device comprising:
a cell assembly in which a plurality of battery cells are arranged in a first direction;
a case having an accommodation space in which the cell assembly is accommodated; and
a surface pressure member providing surface pressure to the cell assembly,
wherein the case includes a partition partitioning the accommodation space, and the surface pressure member accommodates the partition and is coupled to the partition.

2. The battery device of claim 1, wherein
the surface pressure member includes:
a base plate disposed above the partition; and
a pressing portion extending from the base plate and disposed to face both sides of the partition,
wherein the pressing portion elastically presses a side surface of the cell assembly.

3. The battery device of claim 2, wherein
the pressing portion includes:
a pressing plate disposed to be spaced apart from the partition by a certain distance and pressing the cell assembly;
a support portion bent from a lower end of the pressing plate and contacting the partition; and
a connecting plate connecting the pressing plate to the base plate.

4. The battery device of claim 1, wherein the surface pressure member is formed by bending a single metal plate.

5. The battery device of any one of claims 3 to 4, wherein the surface pressure member includes:
a first bend line through which the base plate is connected to the connecting plate; and
a second bend line through which the pressing plate is connected to the connecting plate,
wherein the first bend line and the second bend line are formed to be parallel to a length direction of the partition.

6. The battery device of any one of claims 3 to 5, wherein the base plate is disposed parallel to an upper surface of the partition, and the pressing plate is disposed parallel to a side surface of the partition.

7. The battery device of any one of claims 3 to 6, wherein the base plate and the pressing plate are arranged to be perpendicular to each other.

8. The battery device of any one of claims 3 to 7, wherein only the support portion of the surface pressure member contacts the partition.

9. The battery device of any one of claims 3 to 8, further comprising:
a deformation-suppressing member disposed between the pressing plate and the partition to limit deformation of the pressing plate,
wherein a thickness of the deformation-suppressing member is formed to be less than a gap between the pressing plate and the partition.

10. The battery device of any one of claims 3 to 9, further comprising:
a stopper formed to protrude from a lower end portion of a side surface of the partition,
wherein the support portion is restrained from moving downwardly by the stopper.

11. The battery device of claim 10, further comprising:
a protrusion formed to protrude from an upper end portion of the side surface of the partition,
wherein the protrusion is disposed to contact the connecting plate.

12. The battery device of claim 11, further comprising a fastening member tightly attaching the base plate to an upper surface of the partition and fastened to the partition.

13. The battery device of claim 12, wherein the pressing plate is pressed in a direction away from the partition as the base plate is closer to the upper surface of the partition.
